# EUROPEAN PATENT APPLICATION

(11) **EP 2 389 028 A1**
(43) Date of publication of application: **23.11.2011**
(21) Application number: 10731215.9
(22) Date of filing: 08.01.2010
(51) Int. Cl.: H04W 16/14, H04W 56/00

(54) **MOBILE COMMUNICATION METHOD, WIRELESS BASE STATIONS AND USER EQUIPMENT**

(30) Priority: 13.01.2009 JP 2009005090
(71) Applicant: NTT DOCOMO, INC., Chiyoda-ku Tokyo 100-6150 (JP)
(72) Inventor: IWAMURA, Mikio, Tokyo 100-6150 (JP); COSOVIC, Ivan, Tokyo 100-6150 (JP)
(74) Representative: HOFFMANN EITLE
(86) International application number: PCT/JP2010/050168
(87) International publication number: WO 2010/082546

(57) **Abstract**

A mobile communication method according to the present invention includes: a step (A) of adjusting, at a second radio base station (FBS), a timing of transmitting a downlink signal in a second cell under the control of the second radio base station (FBS), based on an measurement result of a timing of receiving a downlink signal from a first cell under the control of a first radio base station (MBS).

## Description

### TECHNICAL FIELD

The present invention relates to a mobile communication method, a radio base station, and a mobile station.

### BACKGROUND ART

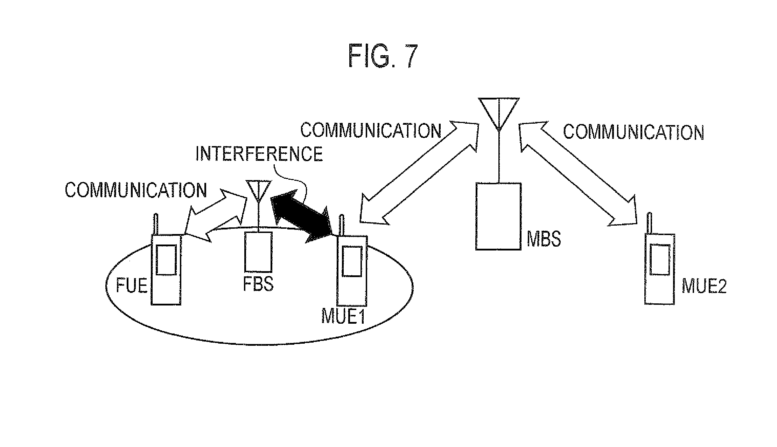

As illustrated in Fig. 7, it is considered to introduce an operation of a mobile communication system in which a macro radio base station MBS (Macro Base Station, also referred to as "eNodeB" or "eNB") and a femto radio base station FBS (Femto Base Station, also referred to as "HeNB" or "HNB") are mixed.

In this case, a mobile station that communicates with the macro radio base station MBS is referred to as "macro mobile station MUE (Macro User Equipment) "and a mobile station that communicates with the femto radio base station FBS is referred to as "femto mobile station FUE (Femto User Equipment)".

Further, a cell under the control of the femto radio base station FBS may also be referred to as "CSG (Closed Subscriber Group) cell". In the CSG cell, connection is permitted only to a specific mobile station belonging to the CSG. An example therefor is that the CSG is set to each family and only the family is permitted to connect to the CSG cell installed at their home. In the CSG cell, the mobile station to which the connection is permitted is limited to the CSG member. Given this fact, it can be easily imaged a case where a mobile station with no access right to the CSG cell is present in the vicinity of the CSG cell and a communication is performed by connecting to another cell, e.g., a cell under the control of the macro radio base station MBS.

Thus, in an environment where the femto radio base station FBS and the macro radio base station MBS are mixed, there is a case where the macro mobile station MUE exists within the coverage of the femto radio base station FBS.

### SUMMARY OF THE INVENTION

### PROBLEMS TO BE SOLVED BY THE INVENTION

However, the above-described mobile communication system has a problem in that when the macro radio base station MBS and the femto radio base station FBS are operated in the same frequency band, it is probable that a significant quality deterioration or a capacity decrease occur.

Particularly, when the macro mobile station MUE is present in the vicinity of the femto radio base station FBS, an interference between the macro mobile station MUE and the femto radio base station FBS poses a problem.

Particularly, when the macro mobile station MUE does not have the access right to the CSG cell under the control of the femto radio base station FBS and performs a notification in the immediate vicinity of the femto radio base station FBS, an interference between the macro mobile station MUE and the femto radio base station FBS is a serious problem.

In the example of Fig. 7, even in the case of the macro mobile stations MUE1 and MUE2 connecting to the same macro radio base station MBS, the interference between the macro mobile station MUE 2 and the femto radio base station FBS is not a serious problem because the distance between the two is large; however, the interference between the macro mobile station MUE1 and the femto radio base station FBS is a serious problem because the distance between the two is small.

For example, when the macro mobile station MUE1 transmits an uplink signal, if the femto mobile station FUE transmits an uplink signal at the same time by using the same radio resource, then the femto radio base station FBS experiences the interference from the macro mobile station MUE1 and thus it is probable that the uplink signal from the femto mobile station FUE cannot be correctly received.

Similarly, when the macro mobile station MUE1 receives a downlink signal from the macro radio base station MBS, if the femto radio base station FBS transmits the downlink signal to the femto mobile station FUE at the same time by using the same radio resource, then it is probable that the macro mobile station MUE1 cannot correctly receive the downlink signal from the macro radio base station MES.

This circumstance prompts study on control to decrease the interference between the macro mobile station MUE1 and the femto radio base station FBS; however, such control is not possible when the downlink is not synchronized between the macro radio base station MBS and the femto radio base station FBS.

Therefore, the present invention is intended to overcome the above-described problem. An object of the present invention is to provide a mobile communication method, a radio base station, and a mobile station, capable of synchronizing a downlink between a macro radio base station MBS (first radio base station) and a femto radio base station FBS (second radio base station).

### MEANS FOR SOLVING THE PROBLEM

A first aspect of the present invention is summarized as a mobile communication method including: a step (A) of adjusting, at a second radio base station, a timing of transmitting a downlink signal in a second cell under the control of the second radio base station, based on an measurement result of a timing of receiving a downlink signal from a first cell under the control of a first radio base station.

A second aspect of the present invention is summarized as a radio base station that functions as a second radio base station in a mobile communication system in which a first radio base station and the second radio base station are mixed, the radio base station including: a transmission timing adjustment unit configured to adjust a timing of transmitting a downlink signal in a second cell under the control of the second radio base station, based on a measurement result of the timing of receiving a downlink signal from a first cell under the control of the first radio base station.

A third aspect of the present invention is summarized as a mobile station including: a measurement unit configured to measure a timing of receiving a downlink signal from a first cell under the control of a first radio base station, during communication in a second cell under the control of a second radio base station; and a report unit configured to notify, to the second radio base station, a measurement result of the timing of receiving a downlink signal from the first cell

### EFFECT OF THE INVENTION

As described above, according to the present invention, it is possible to provide a mobile communication method, a radio base station, and a mobile station, capable of synchronizing a downlink between a macro radio base station MBS (first radio base station) and a femto radio base station FBS (second radio base station).

### BRIER DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a femto radio base station according to the first embodiment of the present invention.
[Fig. 3] Fig. 3 is a diagram explaining one example of broadcast information transmitted by a macro radio base station and a femto radio base station according to the first embodiment of the present invention.
[Fig. 4] Fig. 4 is a diagram explaining one example of a timing of transmitting broadcast information, adjusted by the femto radio base station according to the first embodiment of the present invention.
[Fig. 5] Fig. 5 is a functional block diagram of the femto mobile station according to the first embodiment of the present invention.
[Fig. 6] Fig. 6 is a sequence chart showing an operation of a mobile communication system according to the first embodiment of the present invention.
[Fig. 7] Fig. 7 is a diagram explaining problems inherent in a conventional mobile communication system.

### BEST MODES FOR CARRYING OUT THE INVENTION

### (Configuration of mobile communication system according to first embodiment of the present invention)

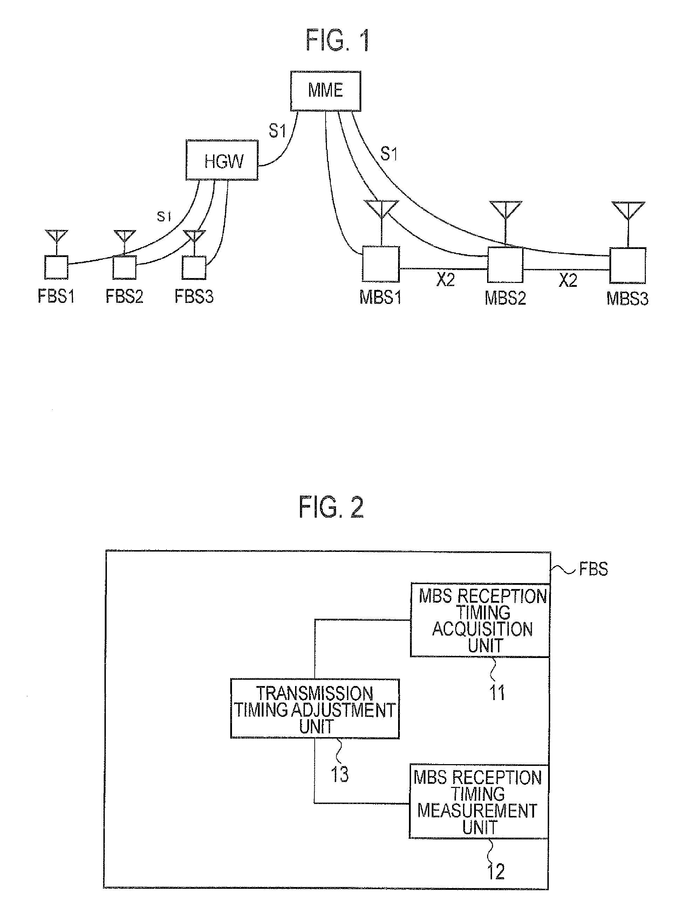

With reference to Fig. 1 to Fig. 5, the configuration of a mobile communication system according to a first embodiment of the present invention will be explained.

As illustrated in Fig. 1, the mobile communication system according to the present embodiment includes: macro radio base stations MBS1 to MBS3 (first radio base station) ; femto radio base stations FBS1 to FBS3 (first radio base station); a gateway apparatus HGW (Home eNB Gateway) that collectively controls the femto radio base stations FBS1 to FBS3; and a mobile switching center MME (Mobility Management Equipment) that collectively controls the macro radio base stations MBS1 to MBS3 and that is connected to the gateway apparatus HGW.

The femto radio base stations FBS1 to FBS3 and the gateway apparatus HGW are connected by an S1 interface, the gateway apparatus HGW and the mobile switching center MME are connected by an S1 interface, the macro radio base stations MBS1 to MBS3 and the mobile switching center MME are connected by an S1 interface, and the macro radio base stations MBS1 to MBS3 are connected with each other by an X2 interface.

In this case, the femto radio base stations FBS1 to FBS3 may be connected with each other by an X2 interface. Further, the femto radio base stations FBS1 to FBS3 and the mobile switching center MME may be connected by the S1 interface without the gateway apparatus HGW therebetween.

Hereinafter, with reference to Fig. 2, the configuration of the femto radio base stations FBS1 to FBS3 will be explained. In this case, the femto radio base stations FBS1 to FBS3 are basically the same in configuration, and are explained collectively as the femto radio base station FBS, below.

As illustrated in Fig. 2, the femto radio base station FBS includes: an MBS reception timing acquisition unit 11; an MBS reception timing measurement unit 12; and transmission timing adjustment unit 13. In this case, the femto radio base station FBS may suffice to include at least one of the MBS reception timing acquisition unit 11 and the MBS reception timing measurement unit 12.

The MBS reception timing acquisition unit 11 is configured to acquire a measurement result of a timing of receiving a downlink signal from a macro cell (first cell) under the control of the macro radio base station MBS (first radio base station), from the femto mobile station FUE that is in communication in a femto cell (second cell) under the control of the femto radio base station FBS (second radio base station).

For example, the MBS reception timing acquisition unit 11 may be configured to acquire the measurement result of the timing of receiving a downlink signal from the macro cell included in a measurement report received from the above-described femto mobile station FUE.

Further, in the femto radio base station FBS, it may be configured that instead of the MBS reception timing acquisition unit 11 acquiring the above-described measurement result of the timing of receiving a downlink signal from the macro cell, the MBS reception timing measurement unit 12 measures the timing of receiving a downlink signal from the macro cell.

For example, the MBS reception timing measurement unit 12 may be configured to receive MIB (Master Information Block) configuring broadcast information transmitted in the above-described macro cell, and to acquire SFN (System Frame Number) included in the MIB as the measurement result of the timing of receiving a downlink signal from the macro cell.

Further, the MBS reception timing measurement unit 12 may be configured to refer to RS (Reference Signal) transmitted in the above-described macro cell, so as to measure the timing of receiving a downlink signal from the macro cell.

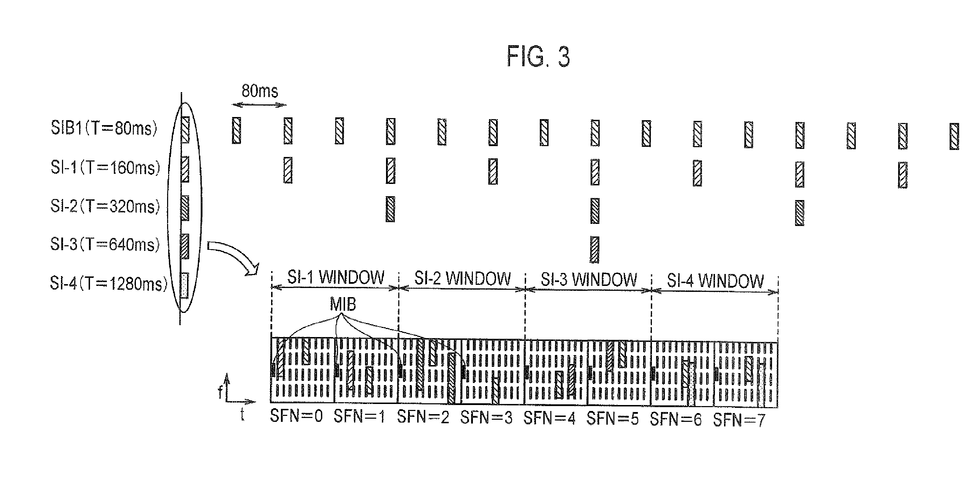

Fig. 3 illustrates one example of the broadcast information transmitted by the macro radio base station MBS and the femto radio base station FBS.

In an example of Fig. 3, in addition to the above-described MIB, SIB1 (System Information Block 1) transmitted in a period of 80 ms and SI-1 (System Information-1) to SI-4 are included in the broadcast information. The SI-1 to SI-4 are configured to be transmitted within an SI-1 window to an SI-4 window, respectively.

The transmission timing adjustment unit 13 is configured to adjust the timing of transmitting a downlink signal in the above-described femto cell, based on the measurement result of the timing of receiving a downlink signal from the macro cell acquired by the MBS reception timing acquisition unit 11, or a timing of receiving a downlink signal from the macro cell measured by the MBS reception timing measurement unit 12.

For example, the transmission timing adjustment unit 13 may be configured to adjust so that a timing of starting a second sub-frame by which a downlink signal is transmitted in the above-described femto cell is aligned with a timing of starting a first sub-frame by which a downlink signal is transmitted in the above-described macro cell.

Further, the transmission timing adjustment unit 13 may be configured to adjust the timing of starting the second sub-frame so that first three OFDM symbols within the first sub-frame by which a downlink signal is transmitted in the above-described macro cell do not overlap with first three OFDM symbols within the second sub-frame by which a downlink signal is transmitted in the above-described femto cell.

In the first three OFDM symbols within each sub-frame, a radio resource for PCFICH (Physical Control Format Indicator Channel), or for PHICH (Physical Hybrid ARQ Indicator Channel), or for PDCCH (Physical Downlink Control Channel) is assigned.

Therefore, it is possible in the femto mobile station FUE to avert a situation where PCFICH signals, PHICH signals, or PDCCH signals collide with each other between the above-described macro cell and the above-described femto cell.

To the PCFICH signal, the PHICH signal, or the PDCCH signal, a retransmission control such as HARQ is not applied, and therefore, it is important to secure the quality of these signals.

On the other hand, to the remaining OFDM symbols, the PDSCH (Physical Downlink Shared Channel) signal is transmitted, and the retransmission control by the HARQ is applied to the PDSCH signal.

Therefore, the PCFICH signal, the PHICH signal, or the PDCCH signal of the femto radio base station FBS collides with the PDSCH signal of the macro radio base station MBS, and when the PCFICH signal, the PHICH signal, or the PDCCH signal of the femto radio base station FBS is caused to collide with the PDSCH signal of the macro radio base station MBS, transmission is made while the quality of the PDSCH is decreased. Thus, it is effective to rescue the PDSCH signal by the HARQ retransmission.

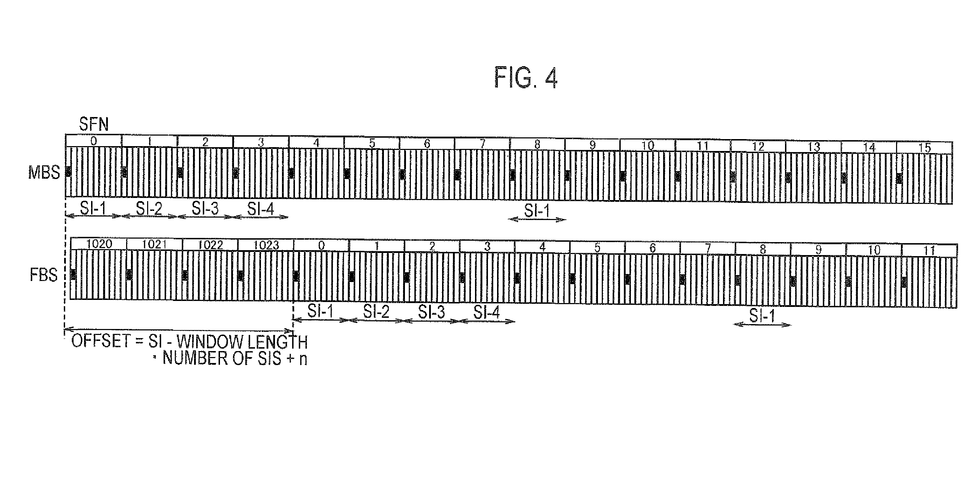

Further, as illustrated in Fig. 4, the transmission timing adjustment unit 13 may adjust to deviate a position of a sub-frame of "SFN = 0" and "sub-frame number = 0" of a downlink in the above-described femto cell, by "SI window length" x "number of Sis" + "n (number of sub-frames included in the received adjustment instruction)", from a position of a sub-frame of "SFN = 0" and "sub-frame number = 0" of a downlink in the above-described macro cell.

In this case, the SI-1 window length to SI-1 window length are the same in length (SI window length). Further, "SI window length" and "number of SIs" are included in SIB1.

Specifically, the transmission timing adjustment unit 13 may be configured to adjust the timing of transmitting a downlink signal in the femto cell, in a state where there is no femto mobile station FUE that is in communication in the femto cell.

Further, the transmission timing adjustment unit 13 may be configured to adjust the timing of transmitting a downlink signal in the femto cell by each predetermined time.

In this case, the transmission timing adjustment unit 13 may be configured to adjust the timing of transmitting a downlink signal in the femto cell by each predetermined time, irrespective of whether there is the femto mobile station FUE that is in communication in the femto cell.

It is noted that the predetermined time may be shorter than a time regulated by "Cyclic Prefix", may be the time itself, or may be the number of sub-frames.

Thus, the adjustment of the transmission timing by each small amount within a predetermined time will be beneficial to maintain a downlink synchronization of the femto mobile station FUE. That is, the transmission timing adjustment unit 13 adjusts the timing of transmitting the femto cell by each small amount insofar as the femto cell mobile station FUE can continuously maintain the downlink synchronization.

Further, the transmission timing adjustment unit 13 may periodically adjust the timing of transmitting a downlink signal in the femto cell, may adjust the timing of transmitting a downlink signal in the femto cell at the time of starting the femto radio base station FBS, or may adjust the timing of transmitting a downlink signal in the femto cell at each reception of the measurement result from the femto mobile station FUE.

It is noted that the femto radio base station FBS may be configured not to transmit a downlink signal in the femto cell, during a period that the transmission timing adjustment unit 13 performs the above-described adjustment.

Further, when the MBS reception timing acquisition unit 11 acquires the measurement result of the timing of receiving a downlink signal from a plurality of macro cells, the transmission timing adjustment unit 13 may be configured to adjust the timing of transmitting a downlink signal in the above-described femto cell, based on a measurement result of the timing of receiving a downlink signal of which the reception level (for example, RSRP (Reference Signal Received Power) or RSRQ (Reference Signal Rceived Quality)) is the strongest.

Alternately, when the MBS reception timing acquisition unit 11 acquires the measurement result of the timing of receiving a downlink signal from a plurality of macro cells, the transmission timing adjustment unit 13 may be configured to adjust the timing of transmitting a downlink signal in the above-described femto cell, based on a measurement result of the timing of receiving a downlink signal of which the QoS (Quality of Service) is the strictest. In this case, QoS is regulated by a permissive value delay time, a permissive transmission speed, etc.

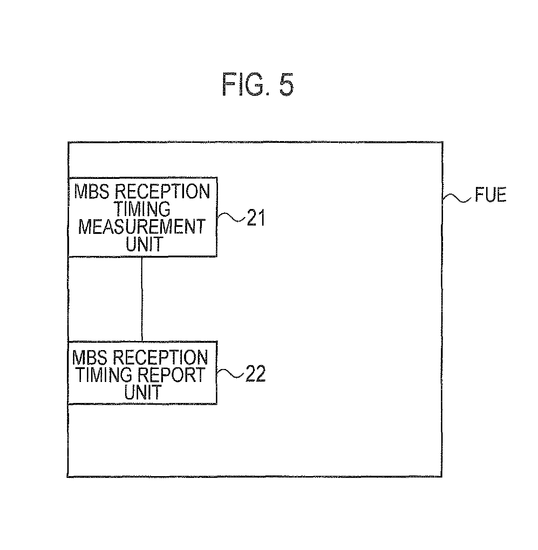

As illustrated in Fig. 5, a mobile station that can communicate in the above-described femto cell (hereinafter referred to as "femto mobile station FUE") includes an MBS reception timing measurement unit 21 and an MBS reception timing report unit 22.

The MBS reception timing measurement unit 21 is configured to measure the timing of receiving a downlink signal from the macro cell under the control of the macro radio base station MBS, during communication in the femto cell under the control of the femto radio base station FBS.

For example, similarly to the MBS reception timing measurement unit 12, the MBS reception timing measurement unit 21 may be configured to receive MIB configuring the broadcast information transmitted in the above-described macro cell, and to acquire SFN included in the MIB as the measurement result of the timing of receiving a downlink signal from the above-described macro cell.

Moreover, similarly to the MBS reception timing measurement unit 12, the MBS reception timing measurement unit 21 may be configured to refer to the reference signal transmitted in the above-described macro cell so as to measure the timing of receiving a downlink signal from the above-described macro cell.

The MBS reception timing report unit 22 is configured to notify, to the femto radio base station FBS, the measurement result of the timing of receiving a downlink signal from the above-described macro cell.

In this case, the MBS reception timing report unit 22 may be configured to transmit, to the femto radio base station FBS, a measurement report including the measurement result of the timing of receiving a downlink signal from the above-described macro cell.

It is noted that the MBS reception timing report unit 22 may transmit the measurement report at each measurement of the reception timing, and may transmit the measurement report including the reception timing at a normal timing of transmitting the measurement report.

### (Operation of the mobile communication system according to the first embodiment of the present invention)

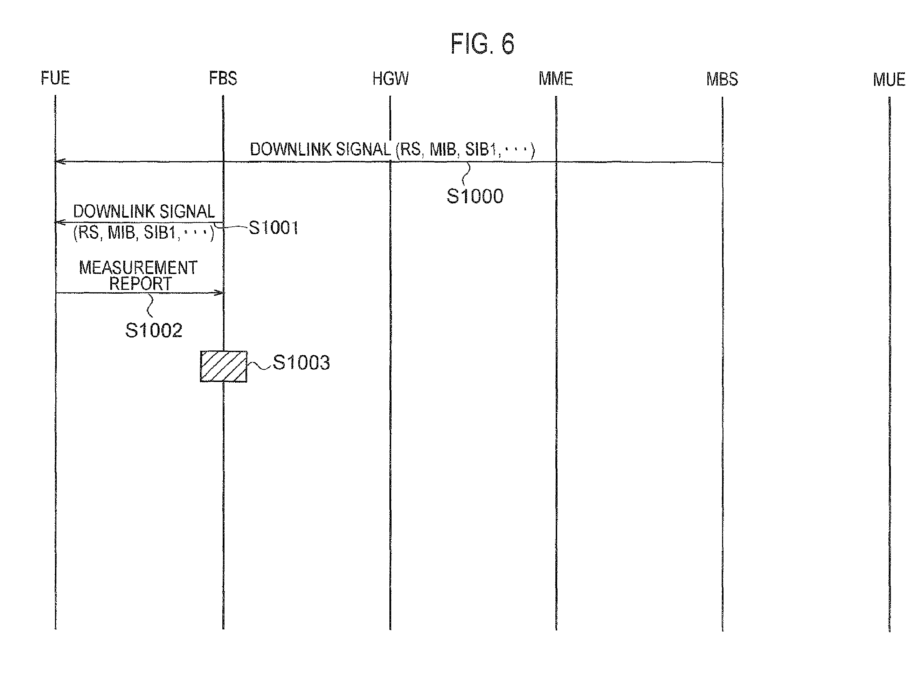

With reference to Fig. 6, the operation of the mobile communication system according to the first embodiment of the present invention will be explained.

As illustrated in Fig. 6, in step S1001, the femto mobile station FUE that is in communication in the femto cell under the control of the femto radio base station FBS receives a downlink signal (for example, RS, MIB, and SIB1) transmitted in the macro cell under the control of the macro radio base station MBS.

In step S1002, the femto mobile station FUE measures the timing of receiving a downlink signal transmitted in the macro cell, and transmits a measurement report including the measurement result to the macro radio base station MBS.

In this case, the femto mobile station FUE may transmit the measurement report at each calculation of the measurement result, and may transmit the measurement report including the measurement result at the timing of transmitting the normal measurement report.

In step S1003, the femto radio base station FBS acquires the above-described measurement result from the received measurement report, and uses the acquired measurement result (for example, the time and the number of sub-frames) so as to adjust the timing of transmitting a downlink signal in the femto cell.

### (Operation and effect of the mobile communication system according to the first embodiment of the present invention)

According to the mobile communication system based on the first embodiment of the present invention, the femto radio base station FBS can adjust the timing of transmitting a downlink signal (i.e., the position of the sub- frame of the downlink) transmitted in the femto cell under the control of the femto radio base station FBS, based on the timing of transmitting a downlink signal (i.e., the position of the sub-frame of the downlink) transmitted in the macro cell under the control of the macro radio base station MBS, and therefore, the downlink can be synchronized between the macro cell under the control of the macro radio base station MBS and the femto cell under the control of the femto radio base station FBS.

Further, according to the mobile communication system based on the first embodiment of the present invention, when the femto radio base station FBS adjusts to deviate the position of the sub-frame of "SFN = 0" and "sub-frame number = 0" of the downlink in the femto cell under the control of the femto radio base station FBS, by "SI window length" x "number of Sis" + "n", from the position of the sub-frame of "SFN = 0" and "sub-frame number = 0" of the downlink in the macro cell under the control of the macro radio base station MBS, the probability that the SI windows of the downlink overlap can be decreased between the macro cell and the femto cell, and thus, it is possible to easily avert the mutual interference of the SIs.

Further, according to the mobile communication system based on the first embodiment of the present invention, the femto radio base station FBS adjusts the above-described "n", so as to deviate the position of the sub-frame of "SFN = 0" and "sub-frame number = 0" so that the timings of transmitting MIB do not overlap between the macro cell and the femto cell, and as a result, it is possible to easily avert the mutual interference of MIB.

On the other hand, according to the mobile communication system based on the first embodiment of the present invention, when the head positions of each sub-frame are aligned between the macro cell under the control of the macro radio base station MBS and the femto cell under the control of the femto radio base station FBS, i.e., synchronization is made in sub-frame units, it becomes easy to control the assignment of the radio resource such as PDSCH (Physical Downlink Shared Channel), PDCCH (Physical Downlink Control Channel), PUSCH (Physical Uplink Shared Channel), and PUCCH (Physical Uplink Control Channel).

The above-mentioned aspects of the embodiment may be expressed as follows:

A first aspect of the present embodiment is summarized as a mobile communication method, including: a step (A) of adjusting, at a femto radio base station FBS (second radio base station), a timing of transmitting a downlink signal in a femto cell (second cell) under the control of the femto radio base station FBS, based on a measurement result of a timing of receiving a downlink signal from a macro cell (first cell) under the control of a macro radio base station MBS (first radio base station).

In the first aspect of the present embodiment, the mobile communication method may further include: a step (B) of measuring, at the femto radio base station FBS, the timing of receiving a downlink signal from the above-described macro cell.

In the first aspect of the present embodiment, the mobile communication method may further include: a step (C) of measuring, at the femto mobile station FUE that is in communication in the above-described femto cell, the timing of receiving a downlink signal from the above-described macro cell; and a step D of notifying, from the femto mobile station FUE to the femto radio base station FBS, the measurement result of the timing of receiving a downlink signal from the above-described macro cell.

In the first aspect of the present embodiment, in the step (A), the femto radio base station FBS may adjust so that a timing of starting a second sub-frame by which a downlink signal is transmitted in the above-described femto cell is aligned with a timing of starting a first sub-frame by which a downlink signal is transmitted in the above-described macro cell.

In the first aspect of the present embodiment, in the step (A), the femto radio base station FBS may adjust the timing of starting the second sub-frame so that first three OFDM symbols within the first sub-frame by which a downlink signal is transmitted in the above-described macro cell do not overlap with first three OFDM symbols within the second sub-frame by which a downlink signal is transmitted in the above-described femto cell.

In the first aspect of the present embodiment, in the step (B), when acquiring the measurement result of the timing of receiving a downlink signal from a plurality of macro cells (first cells), in the step (A), the femto radio base station FBS may adjust the timing of transmitting a downlink signal in the above-described femto cell, based on the measurement result of the timing of receiving a downlink signal of which the reception level is the strongest.

In the first aspect of the present embodiment, in the step (B), when acquiring the measurement result of the timing of receiving a downlink signal from a plurality of macro cells, in the step (A), the femto radio base station FBS may adjust the timing of transmitting a downlink signal in the above-described femto cell, based on the measurement result of the timing of receiving a downlink signal of which the QoS is the strictest.

A second aspect of the present embodiment is summarized as a radio base station that functions as a femto radio base station FBS in a mobile communication system in which macro radio base station MBS and a femto radio base station FBS are mixed, including: a transmission timing adjustment unit 13 configured to adjust a timing of transmitting a downlink signal in a femto cell under the control of the femto radio base station FBS, based on a measurement result of the timing of receiving a downlink signal from a macro cell under the control of the macro radio base station MBS.

In the second aspect of the present embodiment, there may be provided an MBS reception timing measurement unit 12 configured to measure the timing of receiving a downlink signal from the above-described macro cell.

In the second aspect of the present embodiment, there may be provided an MBS reception timing acquisition unit 11 configured to acquire a measurement result of the timing of receiving a downlink signal from the above-described macro cell, from a femto mobile station FUE that is in communication in the above-described femto cell.

In the second aspect of the present embodiment, the transmission timing adjustment unit 13 may be configured to adjust so that a timing of starting a second sub-frame by which a downlink signal is transmitted in the above-described femto cell is aligned with a timing of starting a first sub-frame by which a downlink signal is transmitted in the above-described macro cell.

In the second aspect of the present embodiment, the transmission timing adjustment unit 13 maybe configured to adjust the timing of starting the second sub-frame so that first three OFDM symbols within the first sub-frame by which a downlink signal is transmitted in the above-described macro cell do not overlap with first three OFDM symbols within the second sub-frame by which a downlink signal is transmitted in the above-described femto cell.

In the second aspect of the present embodiment, the transmission timing adjustment unit 13 may be configured to adjust the timing of transmitting a downlink signal in the above-described femto cell, based on a measurement result of the timing of receiving a downlink signal of which the reception level is the strongest, when the MBS reception timing acquisition unit 11 acquires a measurement result of the timing of receiving a downlink signal from a plurality of macro cells.

In the second aspect of the present embodiment, the transmission timing adjustment unit 13 may be configured to adjust the timing of transmitting a downlink signal in the above-described femto cell, based on a measurement result of the timing of receiving a downlink signal of which the QoS is the strictest, when the MBS reception timing acquisition unit 11 acquires a measurement result of the timing of receiving a downlink signal from a plurality of macro cells.

A third aspect of the present embodiment is summarized as a mobile station including: an MBS reception timing measurement unit 21 configured to measure a timing of receiving a downlink signal from a macro cell under the control of a macro radio base station MBS during communication in a femto cell under the control of a femto radio base station FBS; and an MBS reception timing report unit 22 configured to notify, to the femto radio base station FBS, a measurement result of the timing of receiving a downlink signal from the above-described macro cell.

In the third aspect of the present embodiment, the MBS reception timing report unit 22 may be configured to transmit a measurement report including the measurement result of the timing of receiving a downlink signal from the above-described macro cell, to the femto radio base station FBS.

The operation of the above-described macro radio base station MBS, the femto radio base station FBS, the macro mobile station MUE, the femto mobile station FUE, the mobile switching center MME and the gateway apparatus HGW may be implemented by a hardware, may also be implemented by a software module executed by a processor, and may further be implemented by the combination of the both.

The software module may be arranged in a storing medium of an arbitrary format such as RAM(Random Access Memory), / a flash memory, ROM (Read Only Memory), EPROM (Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the macro radio base station MBS, the femto radio base station FBS, the macro mobile station MUE, the femto mobile station FUE, the mobile switching center MME and the gateway apparatus HGW. As a discrete component, such a storing medium and processor may be arranged in the macro radio base station MBS, the femto radio base station FBS, the macro mobile station MUE, the femto mobile station FUE, the mobile switching center MME and the gateway apparatus HGW.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method comprising:
a step (A) of adjusting, at a second radio base station, a timing of transmitting a downlink signal in a second cell under the control of the second radio base station, based on an measurement result of a timing of receiving a downlink signal from a first cell under the control of a first radio base station.

2. The mobile communication method according to claim 1, further comprising:
a step (B) of measuring, at the second radio base station, the timing of receiving a downlink signal from the first cell.

3. The mobile communication method according to claim 1, further comprising:
a step (C) of measuring, at a mobile station that is in communication in the second cell, the timing of receiving a downlink signal from the first cell; and
a step (D) of notifying, from the mobile station to the second radio base station, a measurement result of the timing of receiving a downlink signal from the first cell.

4. The mobile communication method according to claim 1, wherein
in the step (A), the second radio base station adjusts so that a timing of starting a second sub-frame by which a downlink signal is transmitted in the second cell is aligned with a timing of starting a first sub-frame by which a downlink signal is transmitted in the first cell.

5. The mobile communication method according to claim 1, wherein
in the step (A), the second radio base station adjusts the timing of starting the second sub-frame so that first three OFDM symbols within the first sub-frame by which a downlink signal is transmitted in the first cell do not overlap with first three OFDM symbols within the second sub-frame by which a downlink signal is transmitted in the second cell.

6. The mobile communication method according to claim 2, wherein
when the measurement result of the timing of receiving a downlink signal from a plurality of first cells is acquired in the step (B), in the step (A), the second radio base station adjusts the timing of transmitting a downlink signal in the second cell, based on the measurement result of the timing of receiving a downlink signal of which the reception level is the strongest.

7. The mobile communication method according to claim 2, wherein
when the measurement result of the timing of receiving a downlink signal from a plurality of first cells is acquired in the step (B), in the step (A), the second radio base station adjusts the timing of transmitting a downlink signal in the second cell, based on the measurement result of the timing of receiving a downlink signal of which the QoS is the strictest.

8. A radio base station that functions as a second radio base station in a mobile communication system in which a first radio base station and the second radio base station are mixed, the radio base station comprising:
a transmission timing adjustment unit configured to adjust a timing of transmitting a downlink signal in a second cell under the control of the second radio base station, based on a measurement result of the timing of receiving a downlink signal from a first cell under the control of the first radio base station.

9. The radio base station according to claim 8, further comprising:
a measurement unit configured to measure the timing of receiving a downlink signal from the first cell.

10. The radio base station according to claim 8, further comprising:
an acquisition unit configured to acquire the measurement result of the timing of receiving a downlink signal from the first cell, from a mobile station that is in communication in the second cell.

11. The radio base station according to claim 8, wherein the transmission timing adjustment unit is configured to adjust so that a timing of starting a second sub-frame by which a downlink signal is transmitted in the second cell is aligned with a timing of starting a first sub-frame by which a downlink signal is transmitted in the first cell.

12. The radio base station according to claim 8, wherein the transmission timing adjustment unit is configured to adjust the timing of starting the second sub-frame so that first three OFDM symbols within the first sub-frame by which a downlink signal is transmitted in the first cell do not overlap with first three OFDM symbols within the second sub-frame by which a downlink signal is transmitted in the second cell.

13. The radio base station according to claim 10, wherein when the acquisition unit acquires the measurement result of the timing of receiving a downlink signal from a plurality of first cells, the transmission timing adjustment unit is configured to adjust the timing of transmitting a downlink signal in the second cell, based on measurement result of the timing of receiving a downlink signal of which the reception level is the strongest.

14. The radio base station according to claim 10, wherein when the acquisition unit acquires the measurement result of the timing of receiving a downlink signal from a plurality of first cells, the transmission timing adjustment unit is configured to adjust the timing of transmitting a downlink signal in the second cell, based on measurement result of the timing of receiving the downlink signal of which the QoS is the strictest.

15. A mobile station comprising:
a measurement unit configured to measure a timing of receiving a downlink signal from a first cell under the control of a first radio base station, during communication in a second cell under the control of a second radio base station; and
a report unit configured to notify, to the second radio base station, a measurement result of the timing of receiving a downlink signal from the first cell.

16. The mobile station according to claim 15, wherein
the report unit is configured to transmit, to the second radio base station, a measurement report including the measurement result of the timing of receiving a downlink signal from the first cell.
